# EUROPÄISCHE PATENTSCHRIFT

(11) **EP 2 320 107 B1**
(45) Veröffentlichungstag und Bekanntmachung des Hinweises auf die Patenterteilung: **23.12.2015**
(21) Anmeldenummer: 10013452.7
(22) Anmeldetag: 08.10.2010
(51) Int. Cl.: F16F 1/38

(54) **Elastisches Lager mit einer Elastomer-Metall-Buchse, insbesondere Lagerung einer Wankstütze eines Schienenfahrzeugs**
Elastic bearing with an elastomer-metal sleeve, in particular bearing for a rolling support of a rail vehicle
Palier élastique doté d'une douille métallique et élastomère, notamment support d'un dispositif anti-tonneau d'un véhicule sur rail

(30) Priorität: 04.11.2009 DE 102009051833
(43) Veröffentlichungstag der Anmeldung: 11.05.2011
(73) Patentinhaber: Jörn GmbH, 71336 Waiblingen (DE); ALSTOM Transport Technologies, 92300 Levallois-Perret (FR)
(72) Erfinder: Reinke, Kai, 71686 Remseck (DE); Namneck, Martin, 31180 Giesen (DE)
(74) Vertreter: Liebl, Thomas

(56) Entgegenhaltungen:
- EP-A1- 0 479 548
- EP-B1- 0 381 945
- JP-A- 2006 177 388
- JP-A- 2008 095 785
- US-A- 4 767 108

## Beschreibung

Die Erfindung betrifft ein elastisches Lager mit einer Elastomer-Metall-Buchse, insbesondere eine Lagerung einer Wankstütze eines Schienenfahrzeugs nach dem Oberbegriff des Anspruchs 1.

Ein gattungsgemäßes elastisches Lager mit einer Elastomer-Metall-Buchse ist aus EP 0 381 945 B1 bekannt. Die Elastomer-Metall-Buchse ist mit zwei Elastomer-Metall-Halbschalen ausgeführt, die in einem durch äußere, zusammenspannbare Lageraugen-Halbschalen gebildeten Lagerauge als erstem Lagerteil auf einer zylindrischen Stütze als zweitem Lagerteil zusammenspannbar sind. Eine solche Stütze kann hier insbesondere ein Stabilisatorstab eines Kraftfahrzeugs sein.

Die zwei Elastomer-Metall-Halbschalen bestehen zudem jeweils aus einer Elastomer-Halbschale und einer radial innen festhaftend verbundenen, inneren Metall-Halbschale und einer radial außen festhaftend verbundenen, äußeren Metall-Halbschale. Die zwei Elastomer-Metall-Halbschalen sind einseitig an zwei benachbarten Längsrändern über einen Elastomersteg als Filmscharnier zusammenhängend und aufklappbar zum seitlichen Aufstecken auf die Stütze verbunden.

Konkret wird hier an der Innenseite der inneren Metall-Halbschalen eine dünne Gummischicht aufgebracht, die als Elastomersteg und als Filmscharnier die beiden Elastomer-Metall-Halbschalen verbindet. Für die hier bevorzugte Verwendung eines solchen elastischen Lagers zur Lagerung eines Stabilisatorstabs an einem Kraftfahrzeug, muss die Auslegung so erfolgen, dass in der Elastomer-Halbschale die hier im Wesentlichen auftretenden Drehkräfte, Kippkräfte und Verwindungskräfte molekular aufgenommen werden. Axiale Relativbewegungen zwischen den beiden Lagerteilen sind für die Lagerfunktion als Stabilisatorlager von untergeordneter Bedeutung, so dass einerseits das Lager in Axialrichtung steif ausgelegt werden kann und andererseits üblicherweise keine axial wegbegrenzenden Anschläge erforderlich sind.

Das gattungsgemäße elastische Lager ist somit für die Lagerung eines Stabilisatorstabs an einem Kraftfahrzeug gut geeignet und kann durch die Aufklappbarkeit der beiden Elastomer-Metall-Halbschalen einfach und bequem durch Aufklappen, seitliches Aufstecken auf den Stabilisatorstab und Schließen der Elastomer-Metall-Halbschalen sowie anschließende Vorspannung mit den Lageraugen-Halbschalen montiert werden.

Das gattungsgemäße elastische Lager kann jedoch auch dann verwendet werden, wenn eine Axialwegbegrenzung des axialen Federwegs bei sehr hohen Axialbelastungen, insbesondere aus Sicherheitsgründen erforderlich ist. Solche Gegebenheiten liegen beispielsweise bei der Lagerung einer Wankstütze eines Drehgestells an einem Schienenfahrzeug vor. Hier ist für die Funktion eine relativ weiche Axialfederauslegung erforderlich, so dass eine Anschlagbegrenzung eines vorgegebenen freien Federwegs als Sicherheitsmaßnahme erforderlich ist. Dies wird bisher dadurch erreicht, dass auf der Wankstütze einseitig oder beidseitig des elastischen Lagers ein Anschlagelement angebracht, insbesondere aufgeklemmt ist, welches sich nach dem vorgegebenen freien Federweg an einer Stirnseite des Lagerauges als Anschlag abstützt. Ersichtlich sind für eine solche Anordnung zusätzlich zum elastischen Lager weitere separate Anschlagelemente erforderlich, die aufwändig zusätzlich montiert und mit der Möglichkeit von Einstellfehlern justiert werden müssen.

Die Aufgabe der Erfindung besteht daher darin ein gattungsgemäßes elastisches Lager so weiterzubilden, dass dessen Einsatzbereich mit einfachen, kostengünstigen Maßnahmen auch auf Anwendungen mit axialen Federwegbegrenzungen ausgedehnt wird.

Diese Aufgabe wird mit den Merkmalen des Anspruchs 1 gelöst.

Gemäß Anspruch 1 ist in die Elastomer-Metall-Buchse ein Anschlag integriert mit zwei in den Buchseninnenbereich eingesteckten und im montierten Zustand durch die Vorspannkraft auf dem zweiten Lagerteil und gegenüber den inneren Metall-Halbschalen unbeweglich festgelegten Anschlag-Halbschalen.

Zumindest eine Anschlag-Halbschale weist an wenigstens einer Endseite einen radial im montierten Zustand in den Radialbereich einer Stirnseite des aufbaufesten Lagerauges abstehenden Anschlagkragen auf, mit einem axialen Abstandspalt zwischen einem Anschlagbereich des Anschlagkragens und der zugeordneten Lageraugenstirnseite, entsprechend einem vorgegebenen freien axialen Federweg mit einer Anschlagbegrenzung.

Ein einen vorgegebenen freien axialen Federweg begrenzender Anschlag ist hier somit unmittelbar in die Elastomer-Metall-Buchse integriert, so dass der Aufwand für separate Anschlagelemente und deren Montage und Justierung in Verbindung mit einer Endmontage entfällt. Eine Anpassung an den jeweiligen Einsatzfall kann von vorneherein durch eine entsprechende Auslegung der Buchsen und Halbschalen vorgenommen werden. Die Montage des Anschlags kann hier zusammen mit der Elastomer-Metall-Buchse ebenfalls durch seitliches Aufstecken auf das zweite Lagerteil, insbesondere auf eine Wankstütze erfolgen, da auch der Anschlag ähnlich aus zwei Anschlag-Halbschalen gebildet ist.

Im Anmeldungstext wird in fachlich üblicher Weise von Metall-Halbschalen, Zwischenblechen, etc. gesprochen, vom Schutz sollen aber auch entsprechende Teile aus Materialien vergleichbarer Eigenschaften, wie zum Beispiel Kunststoff-Halbschalen, umfasst sein. Weiter handelt es sich bei dem im Anmeldungstext angegebenen Elastomermaterial vorzugsweise um Gummi und die entsprechenden Verbindungen werden vorzugsweise durch Vulkanisieren hergestellt.

In einer zweckmäßigen Weiterbildung nach Anspruch 2 wird auf dem wenigstens einen Anschlagkragen ein zur zugeordneten Lageraugen-Stirnseite weisender Elastomerwulst als elastischer Anschlagkörper fest angebracht, der im Querschnitt vorzugsweise halbkreisförmig oder trapezförmig ausgebildet sein kann. Durch einen solchen elastischen Anschlag wird einerseits ein Anschlaggeräusch gedämpft und ein Anschlag erfolgt relativ weich mit einer in gewünschter Weise über einen kurzen Anschlagweg stark ansteigenden Federkonstante.

In einer konkreten stabilen und gut funktionsfähigen Ausführungsform nach Anspruch 3 ist der Anschlagkragen halbkreisförmig endseitig am halbzylindrischen Anschlag-Halbschalenbereich angeformt und ein Elastomerwulst ist dann entsprechend als Halbring am Anschlagkragen angebracht, insbesondere anvulkanisiert.

In einer Ausführungsform nach Anspruch 4 können an beiden Endseiten der beiden Anschlag-Halbschalen oder nur einer Anschlag-Halbschale jeweils ein Anschlagkragen ausgebildet sein. Bei einer solchen Ausführungsform erfolgt die Anschlagfunktion in beiden axialen Auslenkungsrichtungen. Obwohl hier die beidseitigen Anschlagkragen die Elastomer-Metall-Buchse beidseitig radial überragen, ist eine Anschlagmontage mit einem Einstecken der Anschlag-Halbschalen möglich, da die Elastomer-Metall-Buchse aufklappbar ist.

In einer dazu alternativen und bevorzugteren Ausführungsform nach Anspruch 5 ist ein Anschlagkragen nur an einer Endseite der beiden Anschlag-Halbschalen oder nur an einer Anschlag-Halbschale vorgesehen. Da aber für die Lagerung einer Funktionsstütze, insbesondere einer Wankstütze regelmäßig zwei beabstandete gleiche elastische Lager verwendet werden, ist hier für eine Anschlagbegrenzung in beiden Axialrichtungen eine Paarung von zwei Lagern mit jeweils entgegengesetzt montierten Anschlagkragen erforderlich.

In einer vorteilhaften Weiterbildung nach Anspruch 6 sind die beiden Anschlag-Halbschalen an ihrem zylindrischen Einsteckbereich einseitig an zwei benachbarten Längsrändern mit einem Elastomersteg als Filmscharnier zusammenhängend und aufklappbar, ähnlich den beiden Elastomer-Metall-Halbschalen verbunden. Bei einer Vormontage der Anschlag-Halbschalen in den Elastomer-Metall-Halbschalen zu einem Vormontagemodul ist dabei zu achten, dass die beiden jeweiligen Filmscharniere übereinander liegen, so dass ein gemeinsames Aufklappen beider Schalenanordnungen für eine Montage an einer Funktionsstütze, insbesondere einer Wankstütze möglich ist.

Gemäß Anspruch 7 ist bei einer nur einseitigen Ausbildung oder keiner Ausbildung eines Anschlagkragens an einer Anschlag-Halbschale an der gegenüberliegenden Endseite eine radial abstehende Elastomerlippe als Haltelippe angeformt. Beim Einsetzen der Anschlag-Halbschalen schnappt dann diese Elastomerlippe jeweils an der zugeordneten Kante der inneren Metall-Halbschalen in einem Vormontagezustand ein. Weiter ist der die beiden Anschlag-Halbschalen verbindende Elastomersteg so gestaltet, dass diese im unbelasteten Zustand etwas nach außen von der Kreisgeometrie abweichen und nach außen etwas vorgespannt sind. Durch diese Maßnahmen wird erreicht, dass die in die Elastomer-Metall-Buchse eingesteckten Anschlag-Halbschalen verliersicher bis zu einer Endmontage gehalten werden, da auch die Elastomer-Metall-Buchse im unbelasteten Zustand ohne Aufbringung einer Aufklappkraft im Wesentlichen zylindrisch geschlossen ist.

Zur Erhöhung der Steifigkeit der Anschlag-Halbschalen und insbesondere auch des Anschlagkragens, wird mit Anspruch 8 vorgeschlagen zwischen einem Anschlagkragen-Halbring und einem halbzylindrischen Einsteckbereich einer Anschlag-Halbschale eine entsprechend umlaufende Stufe auszuformen.

Die Anschlag-Halbschalen können nach Anspruch 9 einfach und kostengünstig als tiefgezogene Blechteile hergestellt werden, wobei zudem Anlageflächen mit reibschlusserhöhenden Beschichtungen, insbesondere mit einer Zinkstaubfarbe ausgeführt sein können.

In an sich bekannter Weise können nach Anspruch 10 zur Reduzierung einer Querdehnung des Elastomermaterials Zwischenbleche in der Elastomer-Halbschale eingeformt sein. Ebenso können weitere Ausgestaltungen der gattungsgemäßen Elastomer-Metall-Buchse wie sie allgemein und/oder aus der eingangs genannten Schrift bekannt sind, auch in Verbindung mit der erfindungsgemäßen Anschlagausrüstung verwendet werden.

Anhand einer Zeichnung wird ein Ausführungsbeispiel der Erfindung näher erläutert.

Es zeigen:
- Fig. 1: eine perspektivische Ansicht eines noch nicht montierten elastischen Lagers mit einer Elastomer-Metall-Buchse und Anschlag-Halbschalen,
- Fig. 2: eine Draufsicht in Axialrichtung auf das elastische Lager nach Fig. 1 mit in die Elastomer-Metall-Buchse eingesetzten Anschlag-Halbschalen,
- Fig. 3: einen Längsschnitt entlang der Linie A-A aus Fig. 2,
- Fig. 4: das elastische Lager in einer fertigen Einbaulage in einem Aufnahmeauge in einer Frontansicht, und
- Fig. 5: einen Schnitt entlang der Linie B-B aus Fig. 4.

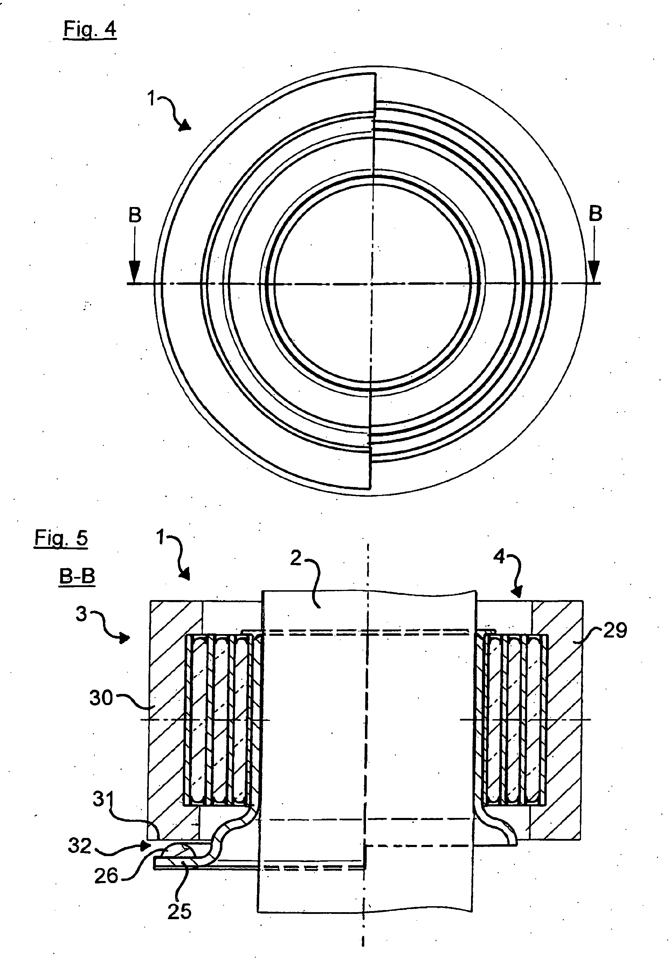

In den Figuren 4 und 5 ist ein fertig montiertes elastisches Lager 1 in der Einbaulage zur Lagerung einer Wankstütze 2 in einem aufbaufesten Lagerauge 3 eines Schienenfahrzeugs dargestellt.

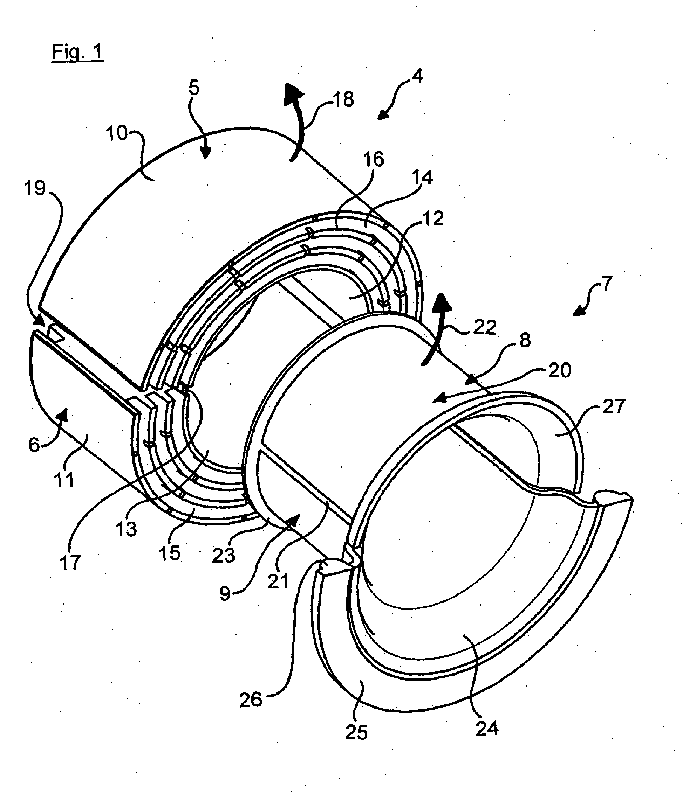

In Fig. 1 sind in perspektivischer Ansicht als Bestandteile dieses elastischen Lagers 1 eine Elastomer-Metall-Buchse 4 aus zwei Elastomer-Metall-Halbschalen 5, 6 sowie eine Anschlagbuchse 7 aus zwei Anschlag-Halbschalen 8, 9 dargestellt.

Die beiden Elastomer-Metall-Halbschalen 5, 6 weisen jeweils eine äußere Metall-Halbschale 10, 11 und radial innere Metall-Halbschale 12, 13 auf, zwischen denen festhaftend eine Elastomer-Halbschale 14, 15 mit jeweils zwei Zwischenblechen 16 einvulkanisiert ist. Die beiden Elastomer-Metall-Halbschalen 5, 6 sind an ihren inneren Metall-Halbschalen 12, 13 einseitig an zwei benachbarten Längsrändern über einen Elastomersteg 17 als Filmscharnier zusammenhängend und aufklappbar (Pfeil 18) verbunden. Im unbelasteten Zustand, ohne Aufklappkraft nehmen die beiden Elastomer-Metall-Halbschalen 5, 6 die dargestellte geschlossene Buchsenform ein. Um ein Aufklappen um den radial inneren Elastomersteg 17 zu ermöglichen, ist zudem eine daran radial sich nach außen erweiternde Längskerbe 19 ausgebildet. Der Elastomersteg 17 kann in an sich bekannter Weise auch dadurch gebildet sein, dass die inneren Metall-Halbschalen 12, 13 mit einer dünnen Gummischicht versehen sind, die einseitig beide Elastomer-Metall-Halbschalen 5, 6 als Elastomersteg 17 verbindet.

Die Anschlag-Halbschalen 8, 9 der Anschlagbuchse 7 entsprechen mit ihren Außenabmessungen (mit einem geringen Übermaß) dem Innendurchmesser der geschlossenen Elastomer-Metall-Buchse 4 und sind ebenfalls einseitig in einem zylindrischen Bereich 20 mit einem Elastomersteg 21 als Filmscharnier verbunden, so dass auch die Anschlag-Halbschalen 8, 9 aufklappbar sind (Pfeil 22). An einer Endseite der Anschlag-Halbschalen 8, 9 ist jeweils eine radial abstehende Elastomerlippe 23 angeformt, die die beiden Anschlag-Halbschalen 8, 9 im Bereich des Elastomerstegs 21 zusätzlich verbindet.

An der (unteren) Anschlag-Halbschale 9 ist endseitig gegenüberliegend zur Elastomerlippe 23 eine Stufe 24 und daran anschließend ein radial abstehender Anschlagkragen 25 ausgebildet. An dessen axial innerer Seite ist ein halbringförmiger Elastomerwulst 26, hier mit einem halbkreisförmigen Querschnitt als elastischer Anschlag anvulkanisiert. Die zweite (obere) Anschlag-Halbschale 8 dient im Wesentlichen zur Komplettierung der Zylinderform und des zylindrischen Bereichs 20 der Anschlagbuchse 7 und weist endseitig gegenüberliegend zur Elastomerlippe 23 für eine Erhöhung der Steifigkeit lediglich eine Stufenausbildung 27, jedoch ohne Anschlagkragen auf.

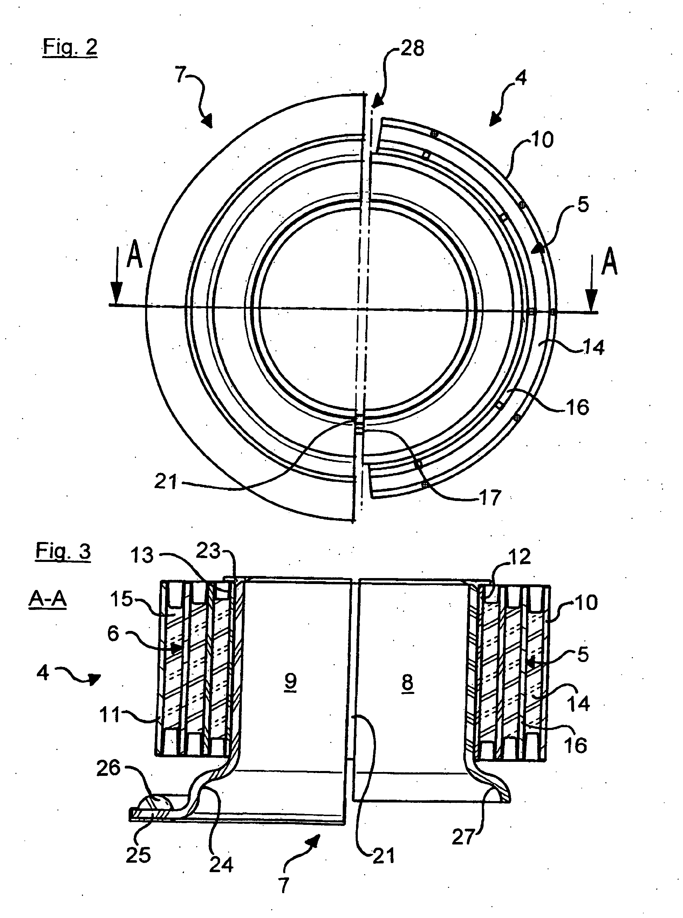

In den Figuren 2 und 3 sind die Elastomer-Metall-Buchse 4 und die Anschlagbuchse 7 in einem Vormontagezustand gezeigt, in dem die Anschlagbuchse 7 in die Elastomer-Metall-Buchse 4 formschlüssig mit ihrem zylindrischen Bereich 20 eingesteckt ist. Dabei schnappt die Elastomerlippe 23 hinter einen stirnseitigen Rand der Elastomerbuchse 4, so dass damit ein verliersicherer Zusammenhalt hergestellt ist. Zudem weisen die inneren Metall-Halbschalen 12, 13 sowie die äußeren Metall-Halbschalen 10, 11 im unbelasteten Zustand einen Abstand auf (Spalt 28), um beim Einbau in ein Lagerauge ein Zusammenspannen mit einer Vorspannung im Elastomermaterial zu ermöglichen.

Die Anschlagbuchse 7 ist so in die Elastomer-Metall-Buchse 4 eingesteckt, dass der Elastomersteg 17 der Elastomer-Metall-Buchse und der Elastomersteg 21 der Anschlagbuchse 7 radial übereinander liegen, so dass die Elastomer-Metall-Buchse 4 zusammen mit der eingesteckten Anschlagbuchse 7 aufklappbar ist.

In den Figuren 4 und 5 ist der fertig montierte, in einem Lagerauge 3 eingebaute und vorgespannte Zustand gezeigt. Dazu wurde die Elastomer-Metall-Buchse 4 zusammen mit der einliegenden Anschlagbuchse 7 aufgeklappt und seitlich über die Wankstütze 2 gesteckt und wieder geschlossen. Anschießend wurde sie im Bereich des Lagerauges 3 mit zusammenspannbaren Lageraugen-Halbschalen 29, 30 des Lagerauges 3 unter Aufbringung einer Vorspannung zusammengespannt. Dabei sind das aufbaufeste Lagerauge 3 das erste Lagerteil und die Wankstütze 2 das zweite Lagerteil, welche mit der Möglichkeit von Relativbewegungen gegeneinander elastisch gelagert sind. Die Vorspannung und der Reibschluss in den Anlageflächen sind dabei so hoch, dass die Relativbewegungen molekular im Elastomermaterial ohne Gleitbewegungen an den Anlageflächen aufgenommen werden. Zur Erhöhung eines solchen Reibschlusses können an sich bekannte Maßnahmen, insbesondere eine Beschichtung mit einer Zinkstaubfarbe vorgenommen werden.

Aus Fig. 5 ist ersichtlich, dass für eine Anschlagfunktion der Anschlagkragen 25 mit seinem Elastomerwulst 26 so weit radial absteht, dass er sich im Radialbereich einer benachbarten Stirnseite 31 der Lageraugen-Halbschale 30 befindet. Zudem ist die Anordnung so ausgelegt und dimensioniert, dass im axial unbelasteten Zustand zwischen dieser Stirnseite 31 und dem Elastomerwulst 26 ein axialer Abstandspalt 32 vorliegt, der einem vorgegebenen freien axialen Federweg entspricht, welcher bei normalen Lagerbetriebsbedingungen nicht überschritten wird. Erst bei einer hohen Axialbelastung zwischen den beiden Lagerteilen 2 und 3, wird der Abstandspalt 32 als freier Federweg überschritten und der Elastomerwulst 26 mit dem dahinter liegenden steifen Anschlagkragen 25 ergeben einen elastischen Anschlag mit hoher elastischer Federkonstante.

## Patentansprüche

1. Elastisches Lager mit einer Elastomer-Metall-Buchse (4), insbesondere Lagerung einer Wankstütze (2) eines Schienenfahrzeugs,
mit zwei die Elastomer-Metall-Buchse (4) bildenden Elastomer-Metall-Halbschalen (5, 6), die in einem durch äußere, zusammenspannbare Lageraugen-Halbschalen (29, 30) gebildeten Lagerauge (3) als erstem Lagerteil auf einer zylindrischen Stütze (2) als zweitem Lagerteil zusammenspannbar sind,
wobei die zwei Elastomer-Metall-Halbschalen (5, 6) jeweils aus einer Elastomer-Halbschale (14, 15) mit einer radial innen festhaftend verbundenen, inneren Metall-Halbschale (12, 13) und einer radial außen festhaftend verbundenen, äußeren Metall-Halbschale (10, 11) bestehen, und
die zwei Elastomer-Metall-Halbschalen (5, 6) einseitig an zwei benachbarten Längsrändern über einen Elastomersteg (17) als Filmscharnier zusammenhängend und aufklappbar zum seitlichen Aufstecken auf die Stütze (2) verbunden sind,
**dadurch gekennzeichnet,**
**dass** in die Elastomer-Metall-Buchse (4) ein Anschlag integriert ist, mit zwei in den Buchseninnenbereich eingesteckten und im montierten Zustand durch die Vorspannung auf dem zweiten Lagerteil (2) und gegenüber den inneren Metall-Halbschalen (12, 13) unbeweglich festgelegten Anschlag-Halbschalen (8, 9), und
**dass** zumindest eine Anschlag-Halbschale (9) an wenigstens einer Endseite einen radial im montierten Zustand in den Radialbereich einer Stirnseite (31) des aufbaufesten Lagerauges (3) abstehenden Anschlagkragen (25) aufweist, mit einem axialen Abstandspalt (32) zwischen einem Anschlagbereich (26) des Anschlagkragens (25) und der Lageraugen-Stirnseite (31) entsprechend einem vorgegebenen freien axialen Federweg mit einer Anschlagbegrenzung.

2. Elastisches Lager nach Anspruch 1, **dadurch gekennzeichnet, dass** auf dem wenigstens einen Anschlagkragen (25) ein zur Lageraugen-Stirnseite (32) weisender Elastomerwulst (26) als elastischer Anschlagkörper fest angebracht ist, der im Querschnitt vorzugsweise halbkreisförmig oder trapezförmig ausgebildet sein kann.

3. Elastisches Lager nach Anspruch 1 oder 2, **dadurch gekennzeichnet, dass** der Anschlagkragen (25) halbkreisförmig endseitig am halbzylindrischen Anschlag-Halbschalenbereich (20) angeformt ist und ein Elastomerwulst (26) entsprechend als Halbring am Anschlagkragen (25) angebracht ist.

4. Elastisches Lager nach einem der Ansprüche 1 bis 3, **dadurch gekennzeichnet, dass** an beiden Endseiten der beiden oder nur einer Anschlag-Halbschale ein Anschlagkragen ausgebildet ist.

5. Elastisches Lager nach einem der Ansprüche 1 bis 3, **dadurch gekennzeichnet, dass** ein Anschlagkragen (25) nur an einer Endseite der beiden Anschlag-Halbschalen oder nur an einer Anschlag-Halbschale (9) ausgebildet ist, und
dass für eine Anschlagbegrenzung des axialen Federweges des zweiten Lagerteils, insbesondere einer Wankstütze (2) zwei beabstandete elastische Lager eingesetzt sind, wobei jeweils die zugeordneten Anschlagkragen an jeweils gegenüberliegenden Endseiten der zugeordneten Anschlag-Halbschalen ausgebildet sind, so dass in einem elastischen Lager eine Anschlagbegrenzung in eine Axialrichtung und im anderen elastischen Lager eine Anschlagbegrenzung in die Gegenrichtung erfolgt.

6. Elastisches Lager nach einem der Ansprüche 1 bis 5, **dadurch gekennzeichnet, dass** die beiden Anschlag-Halbschalen (8, 9) an ihrem zylindrischen Einsteckbereich (20) einseitig an zwei benachbarten Längsrändern mit einem Elastomersteg (21) als Filmscharnier zusammenhängende und aufklappbar entsprechend den Elastomer-Metall-Halbschalen (5, 6) verbunden sind und beide Filmscharniere (17, 21) übereinanderliegend für ein gemeinsames Aufklappen beider Schalenanordnungen vormontiert sind.

7. Elastisches Lager nach einem der Ansprüche 1 bis 6, **dadurch gekennzeichnet, dass** bei einer nur einseitigen Ausbildung oder keiner Ausbildung eines Anschlagkragens (25) an einer Anschlag-Halbschale (8, 9) an der gegenüberliegenden Endseite eine radial abstehende Elastomerlippe (23) als Haltelippe angeformt ist, die beim Einsetzen der Anschlag-Halbschalen (8, 9) jeweils an der zugeordneten Kante der inneren Metall-Halbschalen (12, 13) in einem Vormontagezustand einschnappt, wobei zudem ein verbindender längs verlaufender Elastomersteg (21) so gestaltet ist, dass die beiden Anschlag-Halbschalen (8, 9) im unbelasteten Zustand etwas nach außen von der Kreisgeometrie abweichen und nach außen stehen.

8. Elastisches Lager nach einem der Ansprüche 1 bis 7, **dadurch gekennzeichnet, dass** zwischen einem Anschlagkragen (25) und einem halbzylindrischen Einsteckbereich (20) einer Anschlag-Halbschale (8, 9) zur Erhöhung der Steifigkeit eine entsprechend umlaufende Stufe (24) geformt ist.

9. Elastisches Lager nach einem der Ansprüche 1 bis 8, **dadurch gekennzeichnet, dass** die Anschlag-Halbschalen (8, 9) tiefgezogene Blechteile sind und Anlageflächen mit reibschlusserhöhenden Beschichtungen, insbesondere mit Zink-Staub Farbe ausgeführt sind.

10. Elastisches Lager nach einem der Ansprüche 1 bis 9, **dadurch gekennzeichnet, dass** in den Elastomer-Halbschalen (14, 15) Zwischenbleche (16) angeordnet sind.

## Claims

1. Elastic bearing having an elastomer/metal bush (4), in particular bearing of an anti-swaying support (2) of a rail vehicle, having two elastomer/metal half shells (5, 6) which form the elastomer/metal bush (4) and can be clamped together in a bearing socket (3), which is formed by outer bearing-socket half shells (29, 30) which can be clamped together, as first bearing part on a cylindrical support (2) as second bearing part, the two elastomer/metal half shells (5, 6) consisting in each case of an elastomer half shell (14, 15) with an inner metal half shell (12, 13) which is connected radially on the inside in a bonded manner and an outer metal half shell (10, 11) which is connected radially on the outside in a bonded manner, and the two elastomer/metal half shells (5, 6) being connected on one side at two adjacent longitudinal edges via an elastomer web (17) as integral hinge so as to be contiguous and capable of being folded open for lateral plugging onto the support (2), **characterized in that** a stop is integrated into the elastomer/metal bush (4), having two stop half shells (8, 9) which are plugged into the bush inner region and, in the assembled state, are fixed by way of the prestress on the second bearing part (2) and such that they cannot be moved with respect to the inner metal half shells (12, 13), and **in that**, on at least one end side, at least one stop half shell (9) has a stop collar (25) which, in the assembled state, projects radially into the radial region of an end side (31) of the bearing socket (3) which is fixed to the vehicle body, having an axial spacing gap (32) between a stop region (26) of the stop collar (25) and the bearing-socket end side (31) in a manner which corresponds to a predefined free axial spring travel with a stop limitation means.

2. Elastic bearing according to Claim 1, **characterized in that** an elastomer bead (26) which points towards the bearing-socket end side (32) is attached fixedly as an elastic stop body on the at least one stop collar (25), which elastic stop body can be of preferably semicircular or trapezoidal configuration in cross section.

3. Elastic bearing according to Claim 1 or 2, **characterized in that** the stop collar (25) is integrally moulded in a semicircular manner on the end side of the semi-cylindrical stop half shell region (20), and an elastomer bead (26) is correspondingly attached as a half ring to the stop collar (25).

4. Elastic bearing according to one of Claims 1 to 3, **characterized in that** a stop collar is configured on both end sides of the two stop half shells or only one stop half shell.

5. Elastic bearing according to one of Claims 1 to 3, **characterized in that** a stop collar (25) is configured only on one end side of the two stop half shells or only on one stop half shell (9), and **in that** two elastic bearings which are spaced apart are used for stop limitation of the axial spring travel of the second bearing part, in particular of an anti-swaying support (2), the associated stop collars being configured in each case on end sides, which lie opposite one another in each case, of the associated stop half shells, with the result that stop limitation in an axial direction takes place in one elastic bearing and stop limitation in the opposite direction takes place in the other elastic bearing.

6. Elastic bearing according to one of Claims 1 to 5, **characterized in that**, on their cylindrical plug-in region (20), the two stop half shells (8, 9) are connected on one side at two adjacent longitudinal edges to an elastomer web (21) as integral hinge so as to be contiguous and capable of being folded open in a corresponding manner with respect to the elastomer/metal half shells (5, 6), and both integral hinges (17, 21) are pre-assembled so as to lie above one another for common folding open of both shell arrangements.

7. Elastic bearing according to one of Claims 1 to 6, **characterized in that**, in the case of an only one-sided configuration or no configuration of a stop collar (25) on a stop half shell (8, 9), a radially projecting elastomer lip (23) is integrally moulded as a holding lip on the end side which lies opposite, which holding lip, during the use of the stop half shells (8, 9), snaps in in each case on the associated edge of the inner metal half shells (12, 13) in a preassembled state, a connecting, longitudinally running elastomer web (21) additionally being designed in such a way that the two stop half shells (8, 9) deviate somewhat to the outside from the circular geometry in the unloaded state and protrude to the outside.

8. Elastic bearing according to one of Claims 1 to 7, **characterized in that** a correspondingly circumferential step (24) is formed between a stop collar (25) and a semi-cylindrical plug-in region (20) of a stop half shell (8, 9) in order to increase the rigidity.

9. Elastic bearing according to one of Claims 1 to 8, **characterized in that** the stop half shells (8, 9) are deep-drawn sheet metal parts, and bearing faces are configured with coatings which strengthen the frictional connection, in particular with zinc dust paint.

10. Elastic bearing according to one of Claims 1 to 9, **characterized in that** intermediate plates (16) are arranged in the elastomer half shells (14, 15).

## Revendications

1. Palier élastique comprenant une douille élastomère-métal (4), en particulier support palier d'un support antiroulis (2) d'un véhicule sur rail,
comprenant deux demi-coques élastomère-métal (5, 6) formant la douille élastomère-métal (4) qui peuvent être serrées l'une contre l'autre dans un oeillet de palier (3) formé par des demi-coques d'oeillet de palier extérieures (29, 30) pouvant être serrées l'une contre l'autre, en tant que première partie de palier, sur un support cylindrique (2) en tant que deuxième partie de palier,
les deux demi-coques élastomère-métal (5, 6) se composant à chaque fois d'une demi-coque en élastomère (14, 15) avec une demi-coque en métal intérieure (12, 13) connectée de manière adhérant fixement radialement à l'intérieur et une demi-coque en métal extérieure (10, 11) connectée de manière adhérant fixement radialement à l'extérieur, et
les deux demi-coques élastomère-métal (5, 6) étant connectées d'un côté au niveau de deux bords longitudinaux adjacents par le biais d'une nervure en élastomère (17) en tant que charnière à film de manière cohésive et de manière à pouvoir être ouvertes par pivotement pour l'insertion latérale sur le support (2),
**caractérisé en ce que**
dans la douille élastomère-métal (4) est intégrée une butée avec deux demi-coques de butée (8, 9) enfichées dans la région intérieure de la douille et fixées dans l'état monté par la précontrainte sur la deuxième partie de palier (2) et de manière immobile par rapport aux demi-coques en métal intérieures (12, 13), et
**en ce qu'**au moins une demi-coque de butée (9) présente, au niveau d'au moins un côté d'extrémité, un col de butée (25) saillant radialement dans l'état monté dans la région radiale d'un côté frontal (31) de l'oeillet de palier (3) fixé par la construction, avec un interstice axial (32) entre une région de butée (26) du col de butée (25) et le côté frontal de l'oeillet de palier (31) de manière correspondant à une course de ressort axiale libre prédéfinie avec une limitation de butée.

2. Palier élastique selon la revendication 1, **caractérisé en ce qu'**un bourrelet en élastomère (26) en tant que corps de butée élastique, tourné vers le côté frontal de l'oeillet de palier (32), est monté fixement sur l'au moins un col de butée (25), et peut être réalisé en section transversale de préférence avec une forme semi-circulaire ou trapézoïdale.

3. Palier élastique selon la revendication 1 ou 2, **caractérisé en ce que** le col de butée (25) est formé avec une forme semi-circulaire du côté de l'extrémité au niveau de la région de demi-coque de butée demi-cylindrique (20) et un bourrelet en élastomère (26) correspondant en tant que demi-bague est monté sur le col de butée (25).

4. Palier élastique selon l'une quelconque des revendications 1 à 3, **caractérisé en ce qu'**au niveau des deux côtés d'extrémité des deux ou de seulement une demi-coque (5) de butée est réalisé un col de butée.

5. Palier élastique selon l'une quelconque des revendications 1 à 3, **caractérisé en ce qu'**un col de butée (25) est réalisé seulement au niveau d'un côté d'extrémité des deux demi-coques de butée ou seulement sur une demi-coque de butée (9), et
**en ce que** pour une limitation de butée de la course de ressort axiale de la deuxième partie de palier, en particulier d'un support antiroulis (2), deux paliers élastiques espacés sont utilisés, à chaque fois les cols de butée associés étant réalisés au niveau de côtés d'extrémité respectivement opposés des demi-coques de butée associées, de sorte que dans un palier élastique, une limitation de butée soit produite dans une direction axiale et que dans l'autre palier élastique, une limitation de butée soit produite dans la direction opposée.

6. Palier élastique selon l'une quelconque des revendications 1 à 5, **caractérisé en ce que** les deux demi-coques de butée (8, 9) sont connectées au niveau de leur région d'enfichage cylindrique (20) d'un côté au niveau de deux bords longitudinaux adjacents à une nervure en élastomère (21) en tant que charnière à film de manière cohésive et de manière à pouvoir être ouvertes par pivotement de manière correspondant aux demi-coques élastomère-métal (5, 6) et les deux charnières à film (17, 21) sont prémontées l'une au-dessus de l'autre pour une ouverture par pivotement commune des deux agencements de coque.

7. Palier élastique selon l'une quelconque des revendications 1 à 6, **caractérisé en ce que** dans le cas d'une réalisation seulement d'un seul côté ou d'aucune réalisation d'un col de butée (25) au niveau d'une demi-coque de butée (8, 9), une lèvre en élastomère saillant radialement (23) en tant que lèvre de retenue est formée sur le côté d'extrémité opposé, laquelle, lors de l'insertion des demi-coques de butée (8, 9), s'encliquète à chaque fois au niveau de l'arête associée des demi-coques en métal intérieures (12, 13) dans un état de prémontage, une nervure en élastomère de liaison (21), s'étendant longitudinalement, étant en outre configurée de telle sorte que les deux demi-coques de butée (8, 9), dans l'état non sollicité, s'écartent quelque peu vers l'extérieur de la géométrie circulaire et soient orientées vers l'extérieur.

8. Palier élastique selon l'une quelconque des revendications 1 à 7, **caractérisé en ce qu'**entre un col de butée (25) et une région d'enfichage demi-cylindrique (20) d'une demi-coque de butée (8, 9) est formé un étage périphérique de manière correspondante (24) de manière à augmenter la rigidité.

9. Palier élastique selon l'une quelconque des revendications 1 à 8, **caractérisé en ce que** les demi-coques de butée (8, 9) sont des pièces en tôle embouties profond et des faces de butée avec des revêtements augmentant l'engagement par friction, en particulier avec une couleur à base de poussière de zinc, sont réalisées.

10. Palier élastique selon l'une quelconque des revendications 1 à 9, **caractérisé en ce que** des tôles intermédiaires (16) sont disposées dans les demi-coques en élastomère (14, 15).
